# EUROPEAN PATENT SPECIFICATION

(11) **EP 0 316 169 B1**
(45) Date of publication and mention of the grant of the patent: **16.06.1993**
(21) Application number: 88310584.3
(22) Date of filing: 10.11.1988
(51) Int. Cl.: A47J 31/40

(54) **Food dispensing machine**
Gerät zum Ausgeben von Nahrungsmitteln
Appareil de distribution d'aliments

(30) Priority: 12.11.1987 US 119728
(43) Date of publication of application: 17.05.1989
(73) Proprietor: VKI TECHNOLOGIES INC., St. Hubert Quebec J3Y 5S9 (CA)
(72) Inventor: King, Alan M., Quebec, H3Y 2K1 (CA)
(74) Representative: Abbie, Andrew Kenneth

(56) References cited:
- FR-A- 2 074 479
- US-A- 2 977 026

## Description

The present invention relates to food dispensing machines, and more particularly, to a hot beverage dispensing machine.

Self-service food dispensing machines are usually characterized by being enclosed in a display housing. In some cases, a glass panel or window may be provided to allow persons utilizing the machine to view the mechanical operations going on during the dispensing of such food. The handling of hot beverages, particularly, creates vapors which form above the surface of the hot beverage. If the housing is provided with a window, it will tend to fog up, making it impossible to view the interior of the housing through the window. Furthermore, the presence of such vapors within the housing may provide high humidity within the housing, causing rust and other problems associated with high humidity.

It is known to place fans in enclosed housings of this type, such as described in U.S.-A-2,517,073 and U.S.-A-2,907,265. These patents describe very specific uses of fans or blowers, such as for ventilating the gas burner in the former or the shielding of an opening as in the latter.

US-A-2977026 also shows the use of a blower in a hot beverage dispensing machine for maintaining an upper compartment of a housing at a pressure higher than that of a lower compartment thereof to prevent steam or humid air from the lower compartment where dry ingredients are mixed with hot water entering the upper compartment where the dry ingredients are housed. A down draft serves to aerate the lower compartment which tends to become heated because of the presence of a hot water container therein.

FR-A-2074479 discloses a hot food dispensing machine including a housing having a dispensing region adjacent a housing wall, and a ventilation unit comprising elongate duct means provided with inlet openings and an outlet opening means communicating with negative pressure means for providing a suction in the duct means for drawing vapours from regions adjacent the inlet openings and exhausting the vapours outboard of the housing.

The present invention provides a hot food dispensing machine as defined in the last preceding paragraph characterised in that (i) a window is provided in said housing wall, (ii) said duct means comprises an elongate duct mounted on said wall and extending in part along an edge of said window (iii) said inlet openings are provided at spaced apart locations on the elongate duct and (iv) at least one such inlet opening is provided adjacent said window for drawing vapours from the region of the window in order to reduce fogging thereon.

An embodiment of the invention, which is described hereinafter, is a machine for dispensing hot beverage and comprises pouring means disposed in a pour region in said housing and wherein said elongate duct extends to the pour region and one of said inlet openings opens adjacent said pour region for drawing vapours formed therein.

This embodiment is for dispensing brewed coffee, and said window is provided adjacent a coffee brewing compartment including said pour region for enabling said coffee brewing compartment to be viewed.

In the embodiment, the outlet opening means comprises an outlet opening of said elongate duct and said negative pressure means comprises a vacuum pump communicating with said outlet opening for drawing vapours through said duct and with an exhaust opening in said housing for exhausting such vapours outboard of the machine.

In order that the invention may be well understood, the above-mentioned embodiment, which is given by way of example only, will now be described in more detail with reference to the accompanying drawings, in which:
Fig. 1 is a perspective view of a coffee dispensing machine having a window on the front thereof;
Fig. 2 is a front elevation, partly in cross-section, of the coffee dispensing machine as shown in Fig. 1; and
Fig. 3 is a vertical cross-section, taken along line 3-3 of Fig. 2, illustrating a detail thereof.

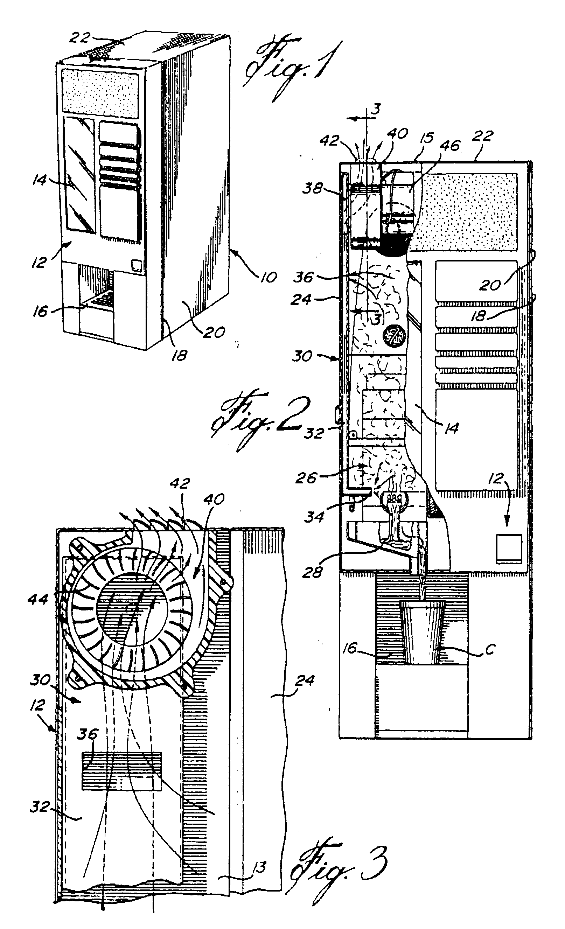

Referring now to the drawings, a coffee brewing and dispensing machine of the type described and illustrated in U.S. Patent 3,552,976 is shown in Fig. 1 having a housing 10 with a front wall 12. A viewing window 14 is provided on the front wall 12. The viewing window 14 allows one to view the brewing operation while the customer waits for the cup C in cup receptacle 16 to be filled.

The front wall 12 includes side panels 13 and 15. Part of the apparatus, such as a coin-handling apparatus (not shown) is mounted to the front wall 12 which is hinged to the side wall 20 by means of a piano hinge 18. The housing 10 also includes a top wall 22 and a side wall 24. Within the housing 10 is provided a brewer compartment 26 which is schematically shown in Fig. 2 and which includes a pour spout 28 adapted to convey the dispensed coffee into the cup C. Also mounted within the front wall 12 is a ventilation unit 30.

As shown in Figs. 2 and 3, the ventilation unit 30 includes an elongated flat duct 32 mounted on side panel 13 (part of front wall 12). As shown in Fig. 2, the duct 32 extends from the pour spout area 28 of the brewer compartment to the top of the front wall 12 where there is mounted a negative pressure means comprising a vacuum pump 40. The duct has an inlet opening 34 adjacent the pour spout 28. An inlet opening 36 is located adjacent the window 14 in the front wall 12. Other openings may be provided as necessary along the length of the duct 32. An outlet opening 38 is provided at the upper end of the duct 32 and communicates with the vacuum pump 40.

The vacuum pump 40 includes, as shown in Fig. 3, a pump impeller 44, and the pump communicates with an exhaust outlet 42 in the top panel 17 of the front wall 12.

In operation, the brewer compartment 26 is operated to pour a hot liquid, such as coffee, just below the boiling point of the liquid. Visible vapors are thus produced which would normally fog up the window 14 and also contribute to a high level of humidity within the housing. The purpose of the ventilation unit 30 is to draw such vapors immediately as they are formed from the pour area by means of inlet opening 34. Other openings, such as opening 36, may be provided adjacent the window 14 in order to exhaust any vapors which might otherwise cause fogging on the window 14. The pump 40 and its electric motor 46 would be chosen of sufficient magnitude to cause a vacuum in the duct 32 to thereby draw the vapors therein as they are being formed. These vapors are exhausted through the exhaust outlet 42 by the impeller 44 at the top of the housing 10.

## Claims

1. A hot food dispensing machine including a housing (10) having a dispensing region adjacent a housing wall (12), and a ventilation unit (30) comprising elongate duct means (32) provided with inlet openings (34, 36) and an outlet opening means (38) communicating with negative pressure means (40) for providing a suction in the duct means for drawing vapors from regions adjacent the inlet openings and exhausting the vapors outboard of the housing characterised in that (i) a window (14) is provided in said housing wall (12), (ii) said duct means comprises an elongate duct (32) mounted on said wall (12) and extending in part along an edge of said window (14), (iii) said inlet openings (34, 36) are provided at spaced apart locations on the elongate duct (32) and (iv) at least one such inlet opening (36) is provided adjacent said window for drawing vapors from the region of the window in order to reduce fogging thereon.

2. A food dispensing machine as claimed in claim 1 for dispensing hot beverage and comprising pouring means (28) disposed in a pour region in said housing, wherein said elongate duct (32) extends to the pour region and one (34) of said inlet openings opens adjacent said pour region for drawing vapors formed therein.

3. A food dispensing machine as claimed in claim 2 for dispensing brewed coffee, wherein said window is provided adjacent a coffee brewing compartment including said pour region for enabling said coffee brewing compartment to be viewed.

4. A food dispensing machine as claimed in claim 1, 2 or 3, wherein said outlet opening means comprises an outlet opening (38) of said elongate duct (32) and said negative pressure means comprises a vacuum pump (40) communicating with said outlet opening (38) for drawing vapors through said duct and with an exhaust opening (42) in said housing for exhausting such vapors outboard of the machine.

## Patentansprüche

1. Ein Ausgabegerät für heiße Nahrungsmittel, welches ein Gehäuse (10) einschließt, das einen Ausgabebereich einer Gehäusewand (12) benachbart besitzt, und eine Ventilationseinheit (30), die ein langgestrecktes Rohrleitungsmittel (32) aufweist, das mit Einlaßöffnungen (34, 36) und einem Auslaßöffnungsmittel (38) versehen ist, das mit einem Negativ-Druck-Mittel (40) in Verbindung steht, um einen Sog in dem Rohrleitungsmittel zu schaffen für ein Abziehen von Dämpfen aus den Einlaßöffnungen benachbarten Bereichen und ein Ausströmen der Dämpfe aus dem Gehäuse heraus, dadurch gekennzeichnet, daß (i) ein Fenster (14) in der Gehäusewand (12) vorgesehen ist, (ii) das Rohrleitungsmittel eine langgestreckte Rohrleitung (32), die an der Wand (12) angebracht ist und sich teilweise entlang einer Kante des Fensters (14) erstreckt, aufweist, (iii) die Einlaßöffnungen (34, 36) bei voneinander beabstandeten Stellen auf der langgestreckten Rohrleitung (32) vorgesehen sind und (iv) mindestens eine solche Einlaßöffnung (36) dem Fenster benachbart zum Abziehen von Dämpfen aus dem Bereich des Fensters vorgesehen ist, um eine Beschlagen darauf zu vermindern.

2. Ein Ausgabegerät für heiße Nahrungsmittel nach Anspruch 1 zum Ausgeben eines heißen Getränkes und, welches ein Gießmittel (28), das in einem Gießbereich in dem Gehäuse angeordnet ist, aufweist, worin die langgestreckte Rohrleitung (32) sich zu dem Gießbereich erstreckt und eine (34) der Einlaßöffnungen sich dem Gießbereich benachbart für ein Abziehen darin gebildeter Dämpfe öffnet.

3. Ein Ausgabegerät für heiße Nahrungsmittel nach Anspruch 2 zum Ausgeben eines zubereiteten Kaffees, worin das Fenster einem Kaffeezubereitungsabschnitt benachbart vorgesehen ist, der den Gießbereich einschließt, um eine Beobachtung des Kaffeezubereitungsabschnittes zu ermöglichen.

4. Ein Ausgabegerät für heiße Nahrungsmittel nach Anspruch 1, 2 oder 3, worin das Auslaßöffnungsmittel eine Auslaßöffnung (38) der langgestreckten Rohrleitung (32) aufweist und das Negativ-Druck-Mittel eine Vakuumpumpe (40) aufweist, die mit der Auslaßöffnung (38) zum Abziehen von Dämpfen durch die Rohrleitung und mit einer Ausströmöffnung (42) in dem Gehäuse zum Ablassen solcher Dämpfe aus dem Gerät heraus in Verbindung steht.

## Revendications

1. Machine de distribution d'aliments chauds comprenant un boîtier (10) ayant une région de distribution située à proximité d'une paroi (12) du boîtier, et une unité de ventilation (30) comprenant des moyens formant conduit allongé (32) dotés d'ouvertures d'entrée (34, 36) et de moyens formant ouverture de sortie (38) communiquant avec des moyens (40) de création de pression négative ayant pour fonction de créer une force d'aspiration dans les moyens formant conduit pour aspirer des vapeurs des régions adjacentes aux ouvertures d'entrée et pour décharger les vapeurs hors du boîtier, caractérisé en ce que (i) une fenêtre (14) est prévue dans ladite paroi de boîtier (12), (ii) lesdits moyens formant conduit comprennent un conduit allongé (32) monté sur ladite paroi (12) et s'étendant en partie le long d'un bord de ladite fenêtre (14), (iii) lesdites ouvertures d'entrée (34, 36) sont prévues dans des emplacements espaces l'un de l'autre sur le conduit allongé (32), et (iv) au moins une telle ouverture d'entrée (36) est prévue à proximité de ladite fenêtre pour aspirer des vapeurs de la région de la fenêtre afin de réduire la formation de buée sur cette dernière.

2. Machine de distribution d'aliments selon la revendication 1 destinée à la distribution de boissons chaudes et comprenant des moyens de versement (28) disposés dans une région de versement dudit boîtier, dans laquelle ledit conduit allongé (32) s'étend jusqu'à la région de versement et l'une (34) desdites ouvertures d'entrée débouche à proximité de ladite région de versement pour aspirer les vapeurs qui se forment dans cette dernière.

3. Machine de distribution d'aliments selon la revendication 2 destinée à la distribution de café infusé, dans laquelle ladite fenêtre est prévue à proximité d'un compartiment d'infusion de café comprenant ladite région de versement pour permettre d'observer ledit compartiment d'infusion de café.

4. Machine de distribution d'aliments selon la revendication 1, 2 ou 3, dans laquelle lesdits moyens formant ouverture de sortie comprennent une ouverture de sortie (38) dudit conduit allongé (32) et lesdits moyens de création de pression négative comportent une pompe à vide (40) communiquant avec ladite ouverture de sortie (38) pour aspirer des vapeurs à travers ledit conduit, ainsi qu'avec une ouverture d'échappement (42) prévue dans ledit boîtier pour décharger de telles vapeurs hors de la machine.
